# EUROPÄISCHE PATENTSCHRIFT

(11) **EP 1 322 907 B1**
(45) Veröffentlichungstag und Bekanntmachung des Hinweises auf die Patenterteilung: **19.01.2011**
(21) Anmeldenummer: 01980362.6
(22) Anmeldetag: 10.09.2001
(51) Int. Cl.: G01B 11/24, G01B 9/02, G01S 17/32

(54) **Tiefenmessung mit frequenzverschobenem Rückkopplungslaser**
Depth measurement using a frequency-shifted feedback laser
Mesure de la profondeur avec un laser à feedback décalé en fréquence

(30) Priorität: 13.09.2000 DE 10045535
(43) Veröffentlichungstag der Anmeldung: 02.07.2003
(73) Patentinhaber: Bonnet, Gerhard, 68309 Mannheim (DE)
(72) Erfinder: Bonnet, Gerhard, 68309 Mannheim (DE)
(74) Vertreter: Pietruk, Claus Peter
(86) Internationale Anmeldenummer: PCT/EP2001/010416
(87) Internationale Veröffentlichungsnummer: WO 2002/023120

(56) Entgegenhaltungen:
- US-A- 5 835 199
- US-A- 5 917 596
- US-A- 5 956 355
- NAKAMURA K ET AL: "OPTICAL FREQUENCY DOMAIN RANGING BY A FREQUENCY-SHIFTED FEEDBACK LASER" IEEE JOURNAL OF QUANTUM ELECTRONICS, IEEE INC. NEW YORK, US, Bd. 36, Nr. 3, März 2000 (2000-03), Seiten 305-316, XP000935994 ISSN: 0018-9197
- PATENT ABSTRACTS OF JAPAN vol. 1998, no. 08, 30. Juni 1998 (1998-06-30) & JP 10 082858 A (ITO HIROMASA;KODEN ELECTRON CO LTD), 31. März 1998 (1998-03-31)
- NAKAMURA K ET AL: "SPECTRAL CHARACTERISTICS OF AN ALL SOLID-STATE FREQUENCY-SHIFTED FEEDBACK LASER" IEEE JOURNAL OF QUANTUM ELECTRONICS, IEEE INC. NEW YORK, US, Bd. 33, Nr. 1, 1997, Seiten 103-110, XP000640595 ISSN: 0018-9197 in der Anmeldung erwähnt
- KOICHIRO NAKAMURA ET AL: "A NEW TECHNIQUE OF OPTICAL RANGING BY A FREQUENCY-SHIFTED FEEDBACK LASER" IEEE PHOTONICS TECHNOLOGY LETTERS, IEEE INC. NEW YORK, US, Bd. 10, Nr. 12, Dezember 1998 (1998-12), Seiten 1772-1774, XP000802174 ISSN: 1041-1135 in der Anmeldung erwähnt
- NAKAMURA K ET AL: "Observation of a highly phase-correlated chirped frequency comb output from a frequency-shifted feedback laser" APPLIED PHYSICS LETTERS, 25 MAY 1998, AIP, USA, Bd. 72, Nr. 21, Seiten 2631-2633, XP001065421 ISSN: 0003-6951 in der Anmeldung erwähnt

## Beschreibung

Die vorliegende Erfindung betrifft ein Verfahren und eine Vorrichtung nach den Oberbegriffen der unabhängigen Ansprüche. Damit befaßt sich die vorliegende Erfindung mit der fassung von dreidimensionalen Objekten, insbesondere der Bestimmung der räumlichen Tiefe eines ausgedehnten dreidimensionalen Objektes.

Es ist häufig wünschenswert, ein gegebenes Objekt dreidimensional abzutasten. Dies ist beispielsweise der Fall, wenn ein kompliziertes Werkstück darauf untersucht werden soll, ob es maßgenau hergestellt wurde oder wenn ein gegebenes Objekt exakt zu vermessen ist.

Es ist im Regelfall zunächst ohne weiteres möglich, eine zweidimensionale Abbildung eines dreidimensionalen Objektes durch Projektion eines Objektbildes auf eine Sensorfläche oder dergleichen zu erzielen. Die Ausmessung in einer dritten Dimension, nämlich die Messung einer räumlichen Tiefe bereitet hingegen im Regelfall größere Probleme. Vorgeschlagen wurde beispielsweise, wie bei einem Echolot kurze Lichtimpulse auszusenden und die Zeit bis zum Empfang der rückgestreuten oder reflektierten Impulse zu messen. Eine Messung mit Licht ist hier auf Grund der extrem geringen Laufzeiten jedoch sehr schwierig, zudem lässt sich von räumlich ausgedehnten Objekten nur mit hohem Aufwand Raumtiefeinformation gewinnen.

Es sind auch schon seit langem interferometrische Verfahren bekannt, bei welchen ein Lichtstrahl in einen Referenzlichtstrahl und einen Objektlichtstrahl aufgespalten wird. Der Objektlichtstrahl wird auf ein Objekt eingestrahlt und von diesem rückempfangen. An einem Lichtempfänger werden dann die Referenz- und Objektlichtstrahlen überlagert und es wird dann, hinreichende Kohärenz beider Strahlen vorausgesetzt, aus der Phasenlage geschlossen, wie weit das Objekt entfernt ist.

Dieses Vorgehen erlaubt je nach Anordnung hochpräzise Messungen, verwiesen wird beispielsweise auf die US-PS 5,956,355; allerdings bereitet die Tiefenmessung bei ausgedehnten Objekten an verschiedenen Stellen Schwierigkeiten.

Es ist weiter bekannt, Entfernungsmessungen mit Frequenzhub-Rückkopplungslasern beziehungsweise frequenzverschobene Rückkopplungslaser (Frequency-Shifted-Feedback-Laser, FSF-Laser) vorzunehmen. Ein Beispiel hierfür findet sich in dem Aufsatz von K. NAKAMURA, T. MIYAHARA, M. YOSHIDA, T. HARA und H. ITO " A new technique of optical ranging by a frequency-shifted feedback laser", IEEE Photonics Technology Letters, Band 10, 1998, Seiten 1772 ff. Das Prinzip von FSF-Lasern und die von diesen erhaltene Emission ist detailliert beschrieben in dem Aufsatz "Observation of a highly phase-correlated chirped frequency comb output from a frequency-shifted feedback laser" von K. NAKAMURA, T. MIYAHARA und H. ITO, Applied Physics Letters, Band 72, Nr. 21, Seiten 2631 ff. sowie in dem Aufsatz "Spectral Characteristics of an All Solid-State Frequency -Shifted Feedback Laser" von K. NAKAMURA, F. ABE, K. KASA-HARA, T. HARA, M. SATO und H. ITO in IEEE-JOURNAL OF QUANTUM ELECTRONICS, Band 33, Seiten 103 ff.

Die Autoren der vorgenannten Dokumente schlagen vor, einen FSF-Laser zu verwenden, der in seinem optischen Resonator einen akustooptischen Modulator aufweist, welcher mit etwa 80 MHz betrieben wird. Der Strahl des FSF-Lasers wird an einem Strahlteiler in einen Referenzstrahl und einen Meßstrahl aufgespalten. Der Meßstrahl durchläuft eine als Objekt dienende Glasfaser mit dem Referenzstrahl und wird an einem weiteren Strahlteiler wieder zusammengeführt und auf ein einzelnes Detektorelement eingestrahlt, dessen Ausgang mit einem Hochfrequenz-Spektral-Analysator untersucht wird.

Ein Ziel der vorliegenden Erfindung besteht darin, ausgedehnte Objekte zu erfassen und hinsichtlich ihrer räumlichen Tiefe ausmessbar zu machen.

Die unabhängigen Ansprüche geben an, wie dieses Ziel erreicht werden kann. Bevorzugte Ausführungsformen finden sich in den abhängigen Ansprüchen.

Ein grundlegender Gedanke der Erfindung besteht somit darin, dass zur Objekterfassung zeitlich variable Referenz- und Objektlichtstrahlbündel erzeugt werden, die Bündel an einem Lichtempfänger überlagert und strahlenweise detektiert werden und die Objekttiefe zu ausgewählten Strahlen im Ansprechen auf die zeitliche Variabilität der überlagerten Strahlen bestimmt wird.

Wesentlich ist hierbei zunächst, dass ausgedehnte Lichtbündel erzeugt und an einem Lichtempfänger überlagert werden, aber Einzelstrahlen innerhalb der Bündel detektiert werden, um die Objekttiefe an diesen ausgewählten Strahlen zu bestimmen. Damit wird es ohne weiteres möglich, bei ausgedehnten Objekten durch die Auswahl unter Verwendung zeitlich variabler Referenz- und Objektlichtstrahlen ortsaufgelöste Messungen vorzunehmen.

Die Lichtbündel besitzen eine kammartige Frequenzstruktur, wobei der Kamm durchgestimmt wird, das heißt alle Frequenzen des Lichtbündels simultan verändert werden. Dies wird mit FSF-Lasern erreicht.

In einer besonders bevorzugten Variante des Verfahrens werden sukzessiv unterschiedliche Modulator- bzw. Durchstimmfrequenzen verwendet. Die typische, sich periodisch wiederholende zeitliche Variabilität von Referenz- und Objektlichtstrahlbündeln führt dazu, dass die Zuordnung zwischen Objekttiefe und zeitlicher Variabilität nicht eindeutig ist. Die Verwendung mehrerer Modulatorfrequenzen ermöglicht es dann, diese Nichteindeutigkeit bei einer einzelnen Frequenz aufzulösen.

Das Erzeugen der Referenz- und Objektlichtbündel kann in einem Laserresonator erfolgen, in welchem ein verstärkendes Medium angeordnet wird. Die Durchstimmung erfolgt dabei bevorzugt mit einem hochfrequent erregten akustooptischen Modulator.

In einer besonders bevorzugten Variante des Verfahrens werden die Lichtbündel strahlenweise analysiert, indem ein lichtempfindlicher Empfänger aus einer Vielzahl von Detektionselementen vorgesehen wird, wobei die zu untersuchenden Strahlen durch Anwahl bzw. Auswahl einzelner Strahlelemente bestimmt werden.

Das Verfahren sieht in einer besonders bevorzugten Variante vor, dass die Detektionselementeauswahl veränderbar ist. Eine Veränderung kann dabei insbesondere dadurch erfolgen, dass ein Bild des Objektes erzeugt wird, und zwar mit einem anderen oder dem gleichen Lichtempfänger, wobei dann auf diesem Bild Punkte mit zu bestimmender Tiefe ausgewählt werden. Die diesen Stellen zugeordneten Detektionselemente können dafür bezüglich der zeitlichen Variabilität der überlagerten Strahlen, die auf sie treffen, untersucht werden.

Schutz wird auch begehrt für eine Vorrichtung, die zur Ausübung des Verfahrens geeignet ist. Das Bündelerzeugungsmittel ist ein FSF-Laser, das heißt ein Frequenzhub-Rückkopplungs-Laser, der in seinem Resonator neben einer Lichtverstärkereinheit, das heißt einem Lichtverstärkermedium, auch einen Modulator umfasst. Der Modulator wird bevorzugt mit Frequenzen zwischen 0,1 MHz und 500 MHz moduliert, wobei eine Modulation mit Radiofrequenzen um 100 MHz besonders vorteilhaft ist. Die niedrigeren Frequenzen verringern die mit der Vorrichtung erzielbare Auflösung, während sehr hohe Frequenzen die Anforderungen an das Meßsystem stark erhöhen.

Die Untersuchung der zeitlichen Variabilität der überlagerten Referenz- und Objektlichtbündel wird in einem bevorzugten Ausführungsbeispiel vorgenommen, indem Signale von jenen Detektionselementen, die auszulesen sind, über einen Multiplexer an eine Auswerteeinheit geleitet werden.

Es kann in einer bevorzugten Variante ein bildgebender Sensor vorgesehen werden, wobei einerseits ein Bild des Objektes aufgenommen wird und andererseits die Tiefe bestimmter Bildpunkte erfasst wird. Es ist möglich, die Detektionselemente zur Objekttiefenbestimmung von jenen Elementen eines bildgebenden Detektors zu trennen, um so eine Optimierung der jeweiligen Lichtempfänger einerseits für hohe räumliche Auflösung und andererseits für hohe Empfindlichkeit auf die zeitliche Variabilität zu ermöglichen. Überdies ist es bevorzugt, wenn der bildgebende Sensor und der objekttiefenmessende Lichtempfänger unterschiedliche spektrale Empfindlichkeiten aufweisen und zwar insbesondere dergestalt, dass der bildgebende Sensor für die Wellenlängen beziehungsweise den Frequenzbereich des Lichtempfängers nicht oder nur marginal empfindlich ist. So ist die Bildaufnahme nicht oder fast nicht gestört durch die Objekttiefenbestimmung.

Die Erfindung wird im folgenden nur beispielsweise anhand der Zeichnung beschrieben. In dieser zeigt:
- Fig. 1: eine Anordnung gemäß der vorliegenden Erfindung;
- Fig. 2: Diagramme zur Veranschaulichung des Funktions- prinzips; nämlich
- Fig. 2a: Frequenzen des von einem Laserresonator emittier- ten Frequenzkammes zu drei verschiedenen Zeiten;
- Fig. 2b: das Emissionsverhalten über der Zeit;
- Fig. 2c: der Zusammenhang zwischen Schwebungsfrequenz und Laufzeitunterschied.
- Fig. 2d: der Zusammenhang zwischen Schwebungsfrequenz und Objekttiefe für eine gegebene Durchstimmfrequenz.

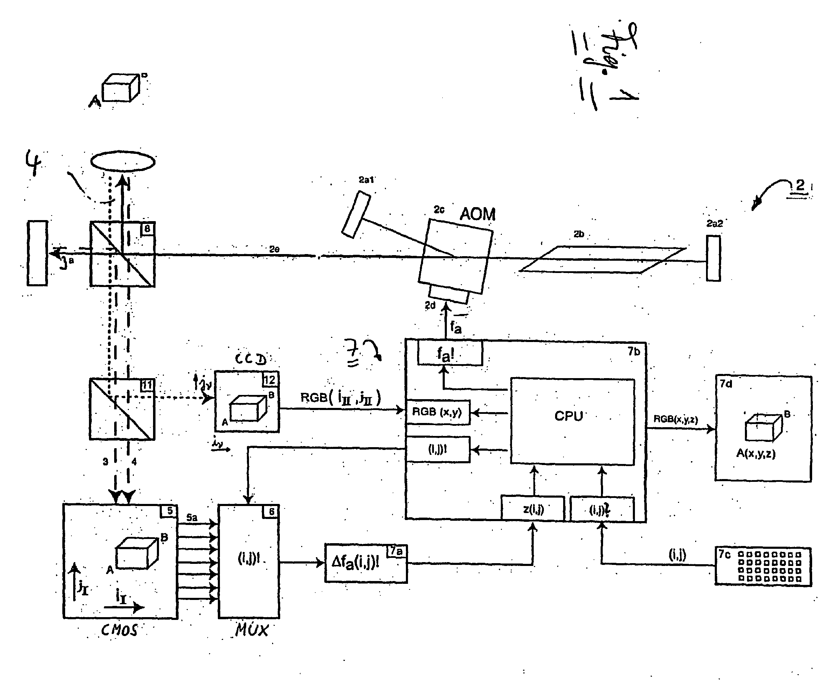

Nach Fig. 1 umfasst eine allgemein mit 1 bezeichnete Objekttiefenbestimmungsvorrichtung 1 ein Lichtbündelerzeugungsmittel 2 zur Erzeugung eines zeitlich variierenden Referenzlichtbündels 3 und eines Objektlichtbündels 4, einen Lichtempfänger 5, auf welchem Objekt- und Referenzlichtbündel 3, 4 überlagert werden, eine Auswahleinheit 6 zur Auswahl einzelner, auszuwertender Strahlen in den auf dem Lichtempfänger 5 überlagerten Lichtbündeln 3, 4, sowie eine Auswerteeinheit 7 zur Auswertung einer Objekttiefe.

Das Lichtbündelerzeugungsmittel 2 umfaßt einen durch hochreflektierende Spiegel 2a1, 2a2 gebildeten optischen Resonator, in welchem ein Verstärkungsmedium 2b und ein akustooptischer Modulator 2c angeordnet sind. Der akustooptische Modulator 2c erhält Hochfrequenzenergie von einem Frequenzgenerator 2d in einem Bereich zwischen 0,1 MHz und 500 MHz, was zu einer zeitlichen Variabilität des ausgestrahlten Lichtes führt, wie später zu erläutern sein wird.

Im Ausgangslichtbündel 2e des Lichtbündelerzeugungsmittels 2 ist ein Strahlteiler 8 vorgesehen, der das Ausgangslichtbündel 2e in ein auf ein Objekt 10 gerichtetes Teilbündel und ein Referenzlichtbündel 3 aufteilt. Im Strahlengang des Referenzlichtbündels 3 ist ein Rückreflektor in festem Referenzabstand angeordnet, der das Referenzlichtbündel 3 über den Strahlteiler 8 auf den Lichtempfänger 5 zurückwirft, während das zum Objekt 10 gerichtete Teilbündel von diesem zurückgeworfen wird und als Objektlichtbündel 4 den Strahlteiler 8 durchlaufend gleichfalls zum Lichtempfänger 5 gestrahlt wird, und zwar so, dass dort Objektlichtbündel 4 und Referenzlichtbündel 3 überlagert werden.

Der Lichtempfänger 5 ist als CMOS-Elementefeld aus einer Matrix von MxN CMOS-Elementen (i,j) aufgebaut, die einzeln über ihre Indices j_{I}, i_{I} adressierbar sind. Von jedem Element (i,j) des CMOS-Feldes des Lichtempfängers 5 geht eine Leitung 5a zur Auswahleinheit 6, die als Multiplexer ausgebildet ist und Signale jeweils nur eines oder einer geringen Anzahl von Detektionselementen auf eine Demodulationseinheit 7a schaltet. Die Demodulationseinheit ist dazu ausgebildet, die durch akustooptische Modulation mittels des akustooptischen Modulators 2c bedingte zeitliche Variabilität des Ausgangslichtbündels 2e in der Überlagerung von Referenzlichtbündel 3 und Objektlichtbündel 4 für die Einzelelemente zu analysieren und eine für die Schwebung derselben repräsentative Größe anzugeben.

Der Ausgang der Demodulationseinheit 7a wird an einen Eingang einer zentralen Datenverarbeitungseinheit 7b gespeist, die auch Eingabemittel 7c und Ausgabemittel 7d aufweist, und mit welcher insbesondere die am den akustooptischen Modulator 2c treibenden Frequenzgenerator 2d vorzuwählende Frequenz fₐ bestimmt werden kann sowie jene Matrixelemente i, j des CMOS Array des Lichtempfängers 5, deren Signal an die Demodulationseinheit 7a gespeist wird.

Im Strahlengang zwischen dem Strahlteiler 8 und dem Lichtempfänger 5 ist weiter ein teildurchlässiger Spiegel 11 vorgesehen, mit welchem Licht vom Objekt 10 auf einen hier beispielhaft als CCD-Matrix ausgebildeten bildgebenden Empfänger 12 reflektiert werden kann. Das Ausgangssignal aller Elemente (i_{II}, j_{II}) des bildgebenden Empfängers 12 wird gleichfalls an die zentrale Datenverarbeitungseinheit gespeist. Dort ist eine Zuordnungseinheit vorgesehen, die jene CMOS-Elemente (i,j) den CCD-Elementen zuordnet, welche dergleichen Objektbereich erfassen.

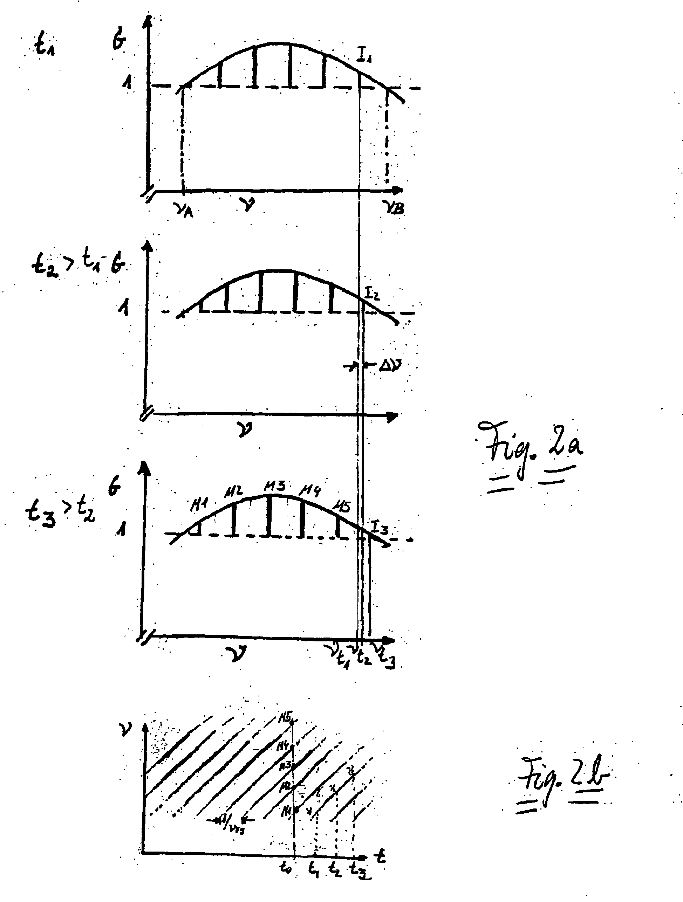

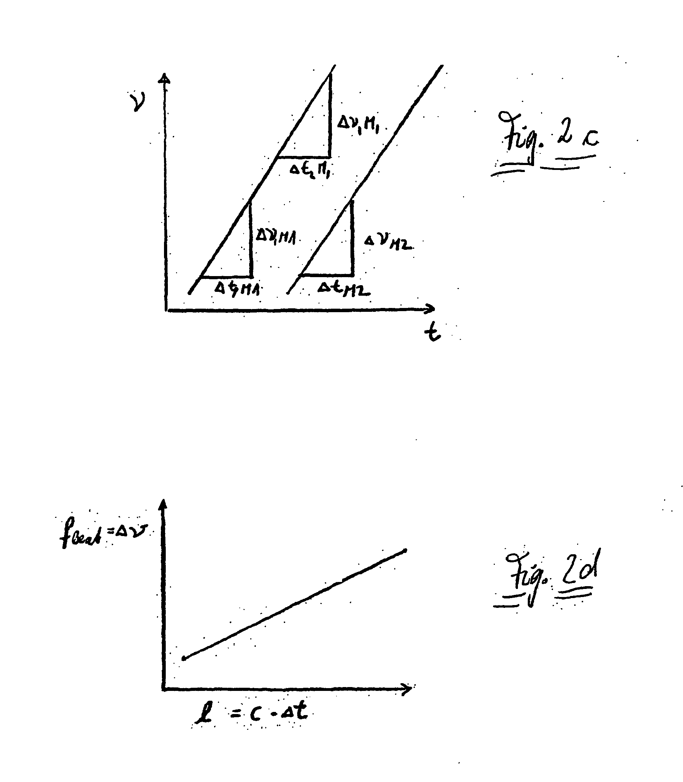

Zur Erläuterung der Funktionsweise der Anordnung wird zunächst Bezug genommen auf die Figuren 2a bis 2d, die das Emissionsverhalten des Lichtbündelerzeugungsmittels sowie die sich aus der zeitlichen Variabilität der Lichtbündel und deren Überlagerung ergebenden Signale und deren Auswertung veranschaulichen.

Fig. 2a zeigt oben zunächst als geschwungene Kurve das Verstärkungsprofil des Verstärkungsmediums 2b. Eine Lichtverstärkung von in das Verstärkungsmedium einlaufenden Lichtwellen findet nur für jene Frequenzen statt, bei denen die Verstärkung größer als 1 ist, das heißt zwischen den Frequenzen ν_{A} und ν_{B}. Bei allen anderen Frequenzen wird das Licht wie üblich abgeschwächt. Der optische Resonator hat nun, ähnlich wie eine schwingende Saite bevorzugte Frequenzen, sogenannte Resonatormoden. Jene Resonatormoden, bei denen die Verstärkung des verstärkten Mediums größer als 1 ist, werden bevorzugt emittiert.

Wird nun der akustooptische Modulator erregt, entsteht durch die Materialschwingung ein Gitter unterschiedlich dichter Stellen; an diesem Gitter wird hindurch tretendes Licht gebeugt, wobei die Wechselwirkung der Lichtphotonen mit den Schwingungsmoden des akustooptischen Modulators charakterisierenden Phononen die Frequenz des an dem Dichtegitter gebeugten Lichtes um die Erregungsfrequenz des akustooptischen Modulators verschoben wird. Dies führt dazu, dass die Lasermoden sich mit der Zeit geringfügig verschieben. Dies ist vom 1. zum 2. und vom 2. zum 3. Bild für unterschiedliche Zeiten nur für eine einzelne Lasermode angedeutet, wo zu erkennen ist, dass sich die Frequenz einer Mode mit der Zeit ändert; dies gilt aber für alle Moden, die im Resonator anschwingen. Es versteht sich dabei, dass, je nachdem, wie weit oberhalb der Verstärkung 1 das Verstärkungsprofil verläuft, die Intensitäten der einzelnen anschwingenden Moden unterschiedlich sind und dass sich die Modenintensität mit der Frequenz ändert.

Fig. 2b zeigt den Verlauf der unterschiedlichen Moden des sich ergebenden Frequenzkammes mit der Zeit. Es ist zu erkennen, dass die Frequenzen sich mit der Zeit für alle Moden in gleicher Weise ändern, also dieselbe Steigung bei Auftrag gegen die Zeit besitzen.

Das Schaubild von Fig. 2b bedeutet nun, dass Licht, das zu unterschiedlichen Zeiten emittiert wird, unterschiedliche Frequenzen besitzen wird. Laufen nun an einem Ort Lichtstrahlen ein, die über unterschiedlich lange optische Wege eingestrahlt werden, also auch zu unterschiedlichen Zeiten aus dem Lichtbündelerzeugungsmittel 2 emittiert wurden, so muss eine Frequenzdifferenz zwischen beiden vorliegen. Diese Frequenzdifferenz ist in Fig. 2c für unterschiedliche Laufzeitdifferenzen und unterschiedliche Moden im Resonator dargestellt. Sie kann als Schwebungsfrequenz auf einem CMOS-Element detektiert werden.

Die Frequenzverschiebung zwischen Objekt- und Referenzlichtbündel ist dabei zunächst nur von der Laufzeitdifferenz abhängig, sofern eine entsprechende Linearität des akustooptischen Modulators vorausgesetzt wird und die akustooptische Modulationsfrequenz fix ist. Es ergibt sich für alle Moden die gleiche Abhängigkeit. (Die von einzelnen Moden stammenden Schwebungsanteile addieren sich demnach.)

Die Frequenzverschiebung ist weiter abhängig davon, mit welcher Frequenz der akustooptische Modulator angeregt wird. Wird die Anregungsfrequenz des akustooptischen Modulators verändert, so ändert sich die Steigung der Kurve und der Abstand der einzelnen "Zähne", das heißt jener Stufen, bei denen eine gegebene optische Weglängendifferenz wieder zu einer Frequenzverschiebung Null führt.

Vor diesem Hintergrund wird die Anordnung von Fig. 1 benutzt wie folgt:
Zunächst wird ein Objekt 10 so im Sichtfeld des abgeteilten Teils des Ausgangslichtbündels 2e angeordnet, dass es beleuchtet wird. Dann wird ein optisches Projektionsbild des Objektes mit dem Bildempfänger 12 aufgenommen und es werden bestimmte Stellen, deren Tiefen zu bestimmen sind, ausgesucht, vorliegend beispielsweise die Stellen A und B. Die Auswahl dieser Stellen kann nach Betrachtung des optischen Projektionsbildes unter Verwendung des Eingabemittels 7c erfolgen. Die den Stellen A und B zugeordneten Elemente (i_{I}, j_{I}) auf dem Lichtempfänger 5 werden an der Auswahleinheit 6 zur Signalauswertung ausgewählt. Dies hat zur Folge, dass das von den ausgewählten CMOS-Elementen (i_{I}, j_{I}) ein Signal an die Demodulationseinheit 7a gegeben wird. Beim Element i_{I}, j_{I} ist ein einzelner Strahl des Objektlichtbündels 4 mit einem einzelnen Strahl des Referenzlichtbündels 3 überlagert; hierbei bedeutet Strahl "einen kleinen Bereich eines ausgedehnten Bündels".

In der Demodulationseinheit 7a wird dann die Schwebungsfrequenz Δν für das Array-Element i_{I}, j_{I}, bestimmt und ein entsprechendes Signal an die zentrale Datenverarbeitungseinheit eingespeist. Die zentrale Datenverarbeitungseinheit 7b verändert nun sukzessive stufenweise in teilerfremden Schritten die Anregungsfrequenz fₐ des akustooptischen Modulators und bestimmt jeweils die sich ergebenden Schwebungsfrequenzen am Array-Element i, j. Aus den dabei insgesamt gewonnenen Signalen wird dann bestimmt, welches Vielfache einer Frequenzverschiebung tatsächlich vorliegt und es wird die entsprechende Weglängendifferenz der Referenz- und Objektlichtstrahlen für dieses Array-Element i_{I}, j_{I} bestimmt.

Aus der Weglängendifferenz und der Position kann dann mit geometrischen Verfahren auf die tatsächliche Koordinate (x,y,z) des Objektes 10 rückgeschlossen werden. Durch Auswahl geeigneter Punkte A, B, ... kann das Objekt an charakteristischen wichtigen Stellen vermessen werden. Die Messung kann sehr schnell erfolgen, so dass leicht weiter über 30, zum Beispiel derzeit bis etwa 2.000 Punkte ohne größeren Schaltungsaufwand in Echtzeit erstellt werden können.

Bei entsprechend hoher Modulationsfrequenz des akustooptischen Modulators lassen sich problemfrei Genauigkeiten im Mikrometer-Bereich oder Submikrometer-Bereich erzielen, was mit den hohen Zeitauflösungen Messungen an schnell bewegten Wellen, Werkzeugteilen, Lautsprechermembranen usw. ermöglicht. Die gleichzeitige Aufnahme eines optischen Bildes gibt dabei für einen Benutzer besonders leicht auswertbare Informationen.

Es sei erwähnt, daß als Resonatoren für den FSF-Laser sowohl Ringresonatoren als auch lineare Resonatoren verwendbar sind. Weiter sei erwähnt, dass anstelle von CMOS-Elementfeldern für die Detektion oder die Übertragung von ausgewählten Strahlen andere, hinreichend schnelle Lichtempfänger und/oder Detektorfelder gleichfalls wie im jeweiligen Stand der Technik verfügbar einsetzbar sind.

## Patentansprüche

1. Verfahren zur Tiefenerfassung ausgedehnter Objekte (10), bei welchem zeitlich variable Referenz- (3) und Objektlichtstrahlbündel (4) erzeugt werden, die an einem Lichtempfänger (5) überlagert und strahlenweise detektiert werden,
**dadurch gekennzeichnet, dass**
die zeitlich variablen Referenz- und Objektlichtstrahlbündel mit einem frequenzverschoben rückgekoppelten Laser (2), auch als Frequency-shifted Feedback-oder FSF-Laser bezeichnet, erzeugt,
die zeitlich variablen Referenz- und Objektlichtstrahlbündel mit dem Lichtempfänger, der eine Mehrzahl Detektorelemente umfasst, ortsaufgelöst empfangen werden und die Objekttiefe im Ansprechen auf die sich aus der Überlagerung der zeitlich variablen Referenz- und Objektlichtstrahlbündel ergebenden Signatur ortsaufgelöst bestimmt wird.

2. Verfahren nach dem vorhergehenden Anspruch, **dadurch gekennzeichnet, dass** der FSF-Laser (2) Lichtbündel mit einer Frequenzstruktur emittiert, die durch Modulation erzeugt wird und dabei mehrere Modulationsfrequenzen verwendet werden, um eine Objekttiefe zu bestimmen.

3. Verfahren nach dem vorhergehenden Anspruch, **dadurch gekennzeichnet, dass** die Lichtbündel (3, 4) mit einer kammartigen Frequenzstruktur erzeugt werden, wobei der Frequenzkamm durchgestimmt und so moduliert wird, dass sukzessive mehrere Durchstimmfrequenzen verwendet werden.

4. Verfahren nach einem der vorhergehenden Ansprüche, **dadurch gekennzeichnet, dass** zur Erzeugung einer zeitlichen Variabilität ein in den Resonator des FSF-Lasers (2) eingebauter akustooptischer Modulator mit Hochfrequenz errest wird.

5. Verfahren nach einem der vorhergehenden Ansprüche, **dadurch gekennzeichnet, dass** die Mehrzahl Detektorelemente des Lichtempfängers (5) in einem Array angeordnet sind und eine Schwebung von zeitlich variablen Referenz- und Objektlichtstrahlbündel mit den Detektorelementen des Arrays erfasst wird.

6. Verfahren nach einem der vorhergehenden Ansprüche, **dadurch gekennzeichnet, dass** für die durch Modulation mit unterschiedlichen Frequenzen erzeugte zeitlich variable Schwebung von Referenz- (3) und Objektlichtstrahlbündel (4) eine repräsentative Größe bestimmt wird.

7. Verfahren nach einem der vorhergehenden Ansprüche, **dadurch gekennzeichnet, dass** die Objekttiefe nur für eine Auswahl von Detektionselementen bestimmt wird.

8. verfahren nach Anspruch 7, **dadurch gekennzeichnet, dass** die Auswahl der Detektionselemente anhand eines optischen Projektionsbildes des Objektes (10) vorgenommen wird.

9. Verfahren nach einem der vorhergehenden Ansprüche, **dadurch gekennzeichnet, dass** das Objektlichtbündel auch mit einem bildgebenden Detektor (12) erfasst wird.

10. Verfahren nach Anspruch 9, **dadurch gekennzeichnet, dass** ein vom Lichtempfänger (5) verschiedener bildgebender Detektor (12) verwendet wird.

11. Vorrichtung (1) zur Tiefenerfassung ausgedehnter Objekte mit einem FSF-Laser (2) zur Erzeugung zeitlich variabler Referenz- (3) und Objektlichtbündel (4), einem Lichtempfänger (5) mit einer Vielzahl von Detektorelementen zum ortsaufgelösten, strahlenweisen Erfassen von Objekt- und Referenzlichtbündeln und einer Auswerteeinheit (7) zur ortsaufgelösten Bestimmung der Objekttiefe aus dem Anspruchen auf die sich aus der Überlagerung der zeitlich variablen Objekt- und Referenzstrahlen ergebenden Signatur.

12. Vorrichtung nach dem vorhergehenden Anspruch, **dadurch gekennzeichnet, dass** dem FSF-Laser (2) ein Modulator zugeordnet ist, um die Frequenz der Lichtbündel mit der Zeit zu verdindern und so eine Weglängendifferenz von Referenz- und Objektlichtstrahlbündel bestimmbar zu machen.

13. Vorrichtung (1) nach einem der vorhergehenden Vorrichtungsansprüche, **dadurch gekennzeichnet, dass** der Modulator ein akustooptischer Modulator (2c) ist.

14. Vorrichtung (1) nach Anspruch 13 , **dadurch gekennzeichnet, dass** der akustooptische Modulator für eine Modulation mit einer Frequenz zwischen 0,1 MHz und 500 MHz, insbesondere um 100 MHz vorgesehen ist.

15. Vorrichtung (1) nach einem der Ansprüche 12 bis 14, **dadurch gekennzeichnet, dass**.eine Wahleinheit zur Auswahl auszulesender und/oder auszuwertender Lichtempfänger- Detektionselemente vorgesehen ist.

16. Vorrichtung (1) nach dem vorhergehenden Anspruch, **dadurch gekennzeichnet, dass** ein bildgebendes Sensorfeld (12) vorgesehen ist.

17. Vorrichtung (1) nach Anspruch 16, **dadurch gekennzeichnet, dass** das bildgebende Sensorfeld (12) von dem Lichtempfänger (5) verschieden ist.

18. Vorrichtung (1) nach dem vorhergehenden Anspruch, **dadurch gekennzeichnet, dass** das bildgebende Sensorfeld (12) und der Lichtempfänger (5) unterschiedliche Spektralempfindlichkeiten aufweisen.

19. Vorrichtung (1) nach dem vorhergehenden Anspruch, **dadurch gekennzeichnet, dass** das bildgebende Sensorfeld für die Wellenlängen des FSF-Lasers nicht empfindlich ist.

## Claims

1. Method for measuring the depth of extended objects (10), in the case of which there are generated temporary variable reference light beams (3) and object light beams (4) which are superimposed at a light receiver (5) and detected in beamwise fashion, **characterized in that**
the temporary variable reference light beam and object light beam are generated with the aid of a frequency-shifted feedback - or FSF - laser (2), the temporary variable reference light beam and object light beam are received in spatially resolved fashion with the aid of the light receiver, which comprises a plurality of detector elements, the object depth is determined in spatially resolved fashion as a response to the signature resulting from the superimposition of the temporary variable reference light beam and object light beam.

2. Method according to the preceding claim, **characterized in that** the FSF laser (2) emits light beams with a frequency structure which is generated by modulation and use is made in this case of a plurality of modulation frequencies in order to determine an object depth.

3. Method according to the preceding claim, **characterized in that** the light beams (3, 4) are generated with a comb-like frequency structure, the frequency comb being tuned and modulated such that use is made of a plurality of successive tuning frequencies.

4. Method according to one of the preceding claims, **characterized in that** an acousto-optical modulator installed in the resonator of the FSF laser (2) is excited by high frequency in order to generate a temporal variability.

5. Method according to one of the preceding claims, **characterized in that** the plurality of detector elements of the light receiver (5) are arranged in an array, and a beating of temporally variable reference light beams and object light beams is detected with the aid of the detector elements of the array.

6. Method according to one of the preceding claims, **characterized in that** a representative variable is determined for the temporary variable beating of reference light beam (3) and object light beam (4) generated by modulation with the aid of differing frequencies.

7. Method according to one of the preceding claims, **characterized in that** the object depth is determined only for a selection of detector elements.

8. Method according to Claim 7, **characterized in that** the selection of the detector elements is undertaken with the aid of an optical projection image of the object (10).

9. Method according to one of the preceding claims, **characterized in that** the object light beam is also detected with an imaging detector (12).

10. Method according to Claim 9, **characterized in that** use is made of an imaging detector (12) differing from the light receiver (5).

11. Device (1) for measuring the depth of extended objects, having an FSF laser (2) for generating temporary variable reference light beams (3) and object light beams (4), a light receiver (5) with a multiplicity of detector elements for the spatially resolved, beamwise detection of object light beams and reference light beams, and an evaluation unit (7) for the spatially resolved determination of the object depth from the response to the signature resulting from the superimposition of the temporary variable object and reference beams.

12. Device according to the preceding claim, **characterized in that** the FSF laser (2) is assigned a modulator in order to render it possible to vary the frequency of the light beams with time and thus to determine a wavelength difference between the reference and object light beams.

13. Device (1) according to one of the preceding device claims, **characterized in that** the modulator is an acousto-optical modulator (2c).

14. Device (1) according to Claim 13, **characterized in that** the acousto-optical modulator is provided for a modulation with a frequency of between 0.1 MHz and 500 MHz, in particular around 100 MHz.

15. Device (1) according to one of Claims 12 to 14, **characterized in that** a selection unit is provided for the selection of light receiver detector elements which are to be read out and/or evaluated.

16. Device (1) according to the preceding claim, **characterized in that** an imaging sensor field (12) is provided.

17. Device (1) according to Claim 16, **characterized in that** the imaging sensor field (12) differs from the light receiver (5).

18. Device (1) according to the preceding claim, **characterized in that** the imaging sensor field (12) and the light receiver (5) have different spectral sensitivities.

19. Device (1) according to the preceding claim, **characterized in that** the imaging sensor field is not sensitive to the wavelengths of the FSF laser.

## Revendications

1. Procédé pour la saisie de la profondeur d'objets étendus (10), dans lequel on génère des faisceaux de rayons lumineux de référence (3) et d'objet (4) variables dans le temps, qui sont superposés sur un récepteur de lumière (5) et détectés sous forme de rayons,
**caractérisé en ce que**
les faisceaux de rayons lumineux de référence et d'objet variables dans le temps sont générés par un laser à feedback décalé en fréquence (2) également désigné par laser à Frequency Shifted Feedback ou FSF, les faisceaux de rayons lumineux de référence et d'objet variables dans le temps avec le récepteur de lumière qui comporte des éléments détecteurs, sont reçus avec une résolution locale et on détermine avec une résolution locale, la profondeur de l'objet en réponse à la signature résultant de la superposition des faisceaux de rayons lumineux de référence et d'objet variables dans le temps.

2. Procédé selon la revendication précédente, **caractérisé en ce que** le laser FSF (2) émet des faisceaux lumineux avec une structure fréquentielle générée par modulation et utilisant plusieurs fréquences de modulation pour déterminer une profondeur d'objet.

3. Procédé selon la revendication précédente, **caractérisé en ce que** les faisceaux lumineux (3, 4) sont générés avec une structure fréquentielle en peigne, le peigne de fréquences étant accordé et modulé de manière à pouvoir utiliser plusieurs fréquences d'accord successives.

4. Procédé selon l'une des revendications précédentes, **caractérisé en ce qu'**on génère la variabilité temporelle en excitant à haute fréquence un modulateur acousto-optique incorporé dans le résonateur du laser FSF (2).

5. Procédé selon l'une des revendications précédentes, **caractérisé en ce que** les éléments détecteurs du récepteur de lumière (5) sont disposés selon une mosaïque et qu'on saisit une interférence des faisceaux de rayons lumineux de référence et d'objet variables dans le temps avec les éléments détecteurs de la mosaïque.

6. Procédé selon l'une des revendications précédentes, **caractérisé en ce qu'**on détermine une grandeur représentative pour l'interférence variable dans le temps des faisceaux de rayons lumineux de référence (3) et d'objet (4) obtenue par modulation avec différentes fréquences.

7. Procédé selon l'une des revendications précédentes, **caractérisé en ce que** la profondeur de l'objet n'est déterminée que pour une sélection d'éléments détecteurs.

8. Procédé selon la revendication 7, **caractérisé en ce que** la sélection des éléments détecteurs est effectuée à l'aide d'une image de projection optique de l'objet (10).

9. Procédé selon l'une des revendications précédentes, **caractérisé en ce que** le faisceau lumineux
de l'objet est également saisi au moyen d'un détecteur imageur (12).

10. Procédé selon la revendication 9, **caractérisé en ce qu'**on utilise un détecteur imageur (12) différent du récepteur de lumière (5).

11. Dispositif (1) pour la saisie de la profondeur d'objets étendus avec un laser FSF (2) pour la génération de faisceaux lumineux de référence (3) et d'objet (4) variables dans le temps, un récepteur de lumière (5) avec une multitude d'éléments détecteurs pour la saisie avec une résolution locale des rayons des faisceaux lumineux de référence et d'objet et une unité de traitement (7) pour déterminer avec une résolution locale, la profondeur de l'objet à partir de la réponse à la signature résultant de la superposition des faisceaux d'objet et de référence dans le temps.

12. Dispositif selon l'une des revendications précédentes, **caractérisé en ce qu'**on attribue un modulateur acousto-optique au laser FSF (2) pour bloquer la fréquence des faisceaux lumineux avec le temps et permettre ainsi la détermination d'une différence de longueur du trajet des faisceaux de rayons lumineux de référence et d'objet.

13. Dispositif (1) selon l'une des revendications précédentes, **caractérisé en ce que** le modulateur est un modulateur acousto-optique (2c).

14. Dispositif (1) selon la revendication 13, **caractérisé en ce que** le modulateur acousto-optique est prévu pour une modulation avec une fréquence entre 0,1 MHz et 500 MHz, notamment aux alentours de 100 MHz.

15. Dispositif (1) selon l'une des revendications 12 à 14, **caractérisé en ce qu'**une unité de sélection est prévue pour la sélection des éléments détecteurs du récepteur de lumière à lire et/ou à traiter.

16. Dispositif (1) selon la revendication précédente, **caractérisé en ce qu'**il est prévu un champ de capteur imageur (12).

17. Dispositif (1) selon la revendication 16, **caractérisé en ce que** le champ de capteur imageur (12) est différent du récepteur de lumière (5).

18. Dispositif (1) selon la revendication précédente, **caractérisé en ce que** le champ de capteur imageur (12) et le récepteur de lumière (5) présentent des sensibilités spectrales différentes.

19. Dispositif (1) selon la revendication précédente, **caractérisé en ce que** le champ de capteur imageur est insensible aux longueurs d'ondes du laser FSF.
